# EUROPÄISCHE PATENTANMELDUNG

(11) **EP 1 209 404 A1**
(43) Veröffentlichungstag der Anmeldung: **29.05.2002**
(21) Anmeldenummer: 00125976.1
(22) Anmeldetag: 28.11.2000
(51) Int. Cl.: F16L 37/084, F16L 33/22

(54) **Anschlussvorrichtung für eine Fluidleitung**

(71) Anmelder: FESTO AG & Co, 73734 Esslingen (DE)
(72) Erfinder: Kees, Ulrich, 66424 Homburg (DE)
(74) Vertreter: Abel, Martin, Dipl.-Ing.

(57) **Zusammenfassung**

Es wird eine Anschlussvorrichtung (6) für eine Fluidleitung vorgeschlagen. Sie verfügt über einen zur Steckmontage in einer Aufnahme (2) eines anderen Bauteils (1) vorgesehenen Einsatz (12), der einen hülsenartigen Hauptkörper (13) aufweist, an dessen Außenumfang zur Verankerung in der Aufnahme (2) dienende metallische Verankerungsmittel (22) vorgesehen sind. Die Verankerungsmittel (22) sind von Bestandteilen eines an dem Hauptkörper (13) fixierten Ringkörpers (14) gebildet, so dass die Möglichkeit besteht, die Verankerungsmittel und den Hauptkörper unabhängig voneinander aus funktionsspezifisch besonders geeigneten Materialien auszuführen.

## Beschreibung

Die Erfindung betrifft eine Anschlussvorrichtung für eine Fluidleitung, mit einem zur Steckmontage in einer Aufnahme eines anderen Bauteils vorgesehenen Einsatz, der über einen hülsenartigen Hauptkörper verfügt, an dessen Außenumfang zur Verankerung in der Aufnahme dienende metallische Verankerungsmittel vorgesehen sind.

Anschlussvorrichtungen dieser Art werden in aller Regel verwendet, um Fluidleitungen an fluidtechnische Geräte wie Ventile oder Antriebe oder dergleichen anschließen zu können. Dabei wird die Anschlussvorrichtung mit einem als Einsatz ausgebildeten Bestandteil in eine Aufnahme eines Bauteils des fluidtechnischen Gerätes eingesteckt und in dieser Aufnahme verankert. Die Steckmontage erfolgt im Rahmen eines Einpressvorganges, wobei am Außenumfang des Einsatzes vorgesehene Verankerungsmittel in die Wandung der Aufnahme eindringen und ein formschlüssiges Verhaken hervorrufen können, um einen sicheren Halt in der Aufnahme zu gewährleisten.

Bei einer aus der EP 0 723 103 B1 bekannten Anschlussvorrichtung der eingangs genannten Art verfügt ein als Kartusche bezeichneter Einsatz über einen hülsenartigen Hauptkörper, wobei die Verankerungsmittel am Außenumfang des Hauptkörpers vorgesehen und einstückig mit dem Hauptkörper ausgebildet sind. Dabei ist von Nachteil, dass der Hauptkörper zum Erhalt einer vom Werkstoff des den Einsatz aufnehmenden Bauteils unabhängigen sicheren Verankerungsfunktion aus Metall bestehen sollte, was relativ hohe Herstellungskosten zur Folge hat. Bei einer aus Kunststoffmaterial bestehenden alternativen Bauform des Hauptkörpers könnten zwar die Herstellkosten reduziert werden, doch würde darunter die Verankerungssicherheit leiden, weil die Verankerungsmittel bei einem harten Material des mit der Anschlussvorrichtung auszustattenden Bauteils keine oder eine nur ungenügende Verankerungswirkung entfalten könnten.

Es ist die Aufgabe der vorliegenden Erfindung, eine durch Steckmontage in einer Aufnahme eines anderen Bauteils fixierbare Anschlussvorrichtung zu schaffen, die bei geringen Herstellkosten und unabhängig vom Material des anderen Bauteils eine sichere Fixierung gewährleistet.

Zur Lösung dieser Aufgabe ist vorgesehen, dass die Verankerungsmittel von Bestandteilen eines an dem Hauptkörper fixierten Ringkörpers gebildet sind.

Auf diese Weise besteht die Möglichkeit, das Material für die metallischen Verankerungsmittel unabhängig vom Material des zugeordneten Hauptkörpers auszuwählen und eine unter Berücksichtigung der funktionellen Anforderungen sowie der Material- und Herstellkosten erfolgende Materialauswahl zu treffen. So besteht insbesondere die Möglichkeit, durch die metallischen Verankerungsmittel einen sicheren Halt unabhängig vom Material des mit dem Einsatz auszustattenden Bauteils zu gewährleisten und gleichzeitig den Hauptkörper aus kostengünstigerem nichtmetallischem Material und vorzugsweise aus Kunststoffmaterial zu fertigen.

Vorteilhafte Weiterbildungen der Erfindung gehen aus den Unteransprüchen hervor.

Der die metallischen Verankerungsmittel bildende Ringkörper besteht zweckmäßigerweise vollständig aus Metall und insbesondere aus Federstahlmaterial.

Eine konstruktiv besonders einfache Bauvariante liegt vor, wenn die Verankerungsmittel unmittelbar vom nach radial außen orientierten äußeren Randabschnitt des Ringkörpers gebildet sind. Dabei kann sich der Randabschnitt in der einfachsten Bauform ununterbrochen um den Hauptkörper herum erstrecken, wobei durch eine entsprechend geringe Materialdicke ein formschlüssiger Verankerungseffekt bezüglich der zugeordneten Aufnahme gewährleistet werden kann.

Bei einer alternativen Bauform ist der äußeren Randabschnitt des Ringkörpers in Abständen unterbrochen, wobei die zwischen den Unterbrechungen liegenden Bereichen des Randabschnittes einzelne Verankerungselemente bilden, die individuell mit der Aufnahme des zugeordneten Bauteils zusammenwirken können.

Bei einer besonders vorteilhaften Bauform sind die Verankerungsmittel von über den Außenumfang des Hauptkörpers verteilt angeordneten Verankerungselementen gebildet, unter denen sich sowohl radial über den Außenumfang des Ringkörpers des Haltekörpers vorstehender Stützelemente als auch widerhakenartig nach außen über den Außenumfang des Hauptkörpers vorstehende Verhakungselemente befinden. Hier kann der Außenumfang im Bereich der Stützelemente so gewählt werden, dass bei der Steckmontage kein oder nur ein geringer Reibkontakt mit der Umfangsfläche der Aufnahme stattfindet und der Einsatz durch die Stützelemente in der Aufnahme zentriert wird. Die eigentliche, einem Herausziehen des Einsatzes aus der Aufnahme entgegenwirkende Sicherungsfunktion wird von den Verhakungsmitteln übernommen, die bei einer entgegen der Montagerichtung auf den Einsatz ausgeübten Zugbeanspruchung verzahnungsartig formschlüssig in das Material des zugeordneten Bauteils eingreifen und sich diesem gegenüber verhaken können.

Der Ringkörper ist zu seiner Fixierung zweckmäßigerweise koaxial in den Hauptkörper eingebettet, wobei er einen vorzugsweise in sich geschlossenen ringförmigen Einbettungsabschnitt aufweist, mit dem er in der Wandung des Hauptkörpers festgelegt ist. Dies geschieht insbesondere dadurch, dass der Ringkörper zwischen zwei koaxial aufeinanderfolgende und axial zugfest miteinander verbundene hülsenförmige Hauptkörperabschnitte eingegliedert ist. Die Eingliederung erfolgt zweckmäßigerweise durch Einbettung zwischen die beiden Hauptkörperabschnitte bei einer stoffschlüssigen Verbindung derselben insbesondere im Rahmen eines Spritzgrießverfahrens. Bei einer hinsichtlich der Herstellkosten noch interessanteren Lösung sind die beiden Hauptkörperabschnitte unter Eingliederung des Ringkörpers einstückig miteinander verbunden, indem sie als Bestandteil eines beispielsweise durch Spritzgießen hergestellten einstückigen Hauptkörpers ausgeführt sind.

Zweckmäßigerweise wird die axial zugfeste Verbindung zwischen den Hauptkörperabschnitten unmittelbar durch die Hauptkörperabschnitte selbst bewirkt, wobei der Ringkörper durch entsprechende Ausgestaltung, beispielsweise durch geeignete Formgebung seiner Außenkontur und/oder durch Ausstattung mit Aussparungen, so ausgeführt ist, dass er vom Material der Hauptkörper passiert und beispielsweise durchsetzt wird.

Zum Festhalten der anzuschließenden Fluidleitung können im Bereich des Innenumfanges des Hauptkörpers Haltemittel vorgesehen sein, beispielsweise in Gestalt federelastischer beweglicher Krallenelemente, die eine eingeführte Fluidleitung am Außenumfang beaufschlagen können. Obgleich es prinzipiell möglich wäre, diese Haltemittel bezüglich dem die Verankerungsmittel aufweisenden Ringkörper separat auszuführen, ist eine besonders vorteilhafte Bauform der Anschlussvorrichtung dann gegeben, wenn die Haltemittel ebenfalls von Bestandteilen des die Verankerungsmittel aufweisenden Ringkörpers gebildet sind. Dieser Ringkörper übernimmt dann eine Doppelfunktion, einerseits zur Verankerung des Einsatzes in der vorzugsweise zylindrischen Aufnahme eines Bauteils und andererseits zum Festhalten der in den Einsatz eingeführten anzuschließenden Fluidleitung.

Ein derartiger Ringkörper ist insbesondere so installiert, dass er die Wandung des Hauptkörpers radial durchgreift, wobei die Verankerungsmittel über den Außenumfang des Hauptkörpers hinausragen und die Haltemittel nach innen in den vom Hauptkörper umgrenzten Innenraum vorstehen.

Bei einer besonders kostengünstigen Variante ist der Ringkörper als Stanzteil oder Stanz-Biegeteil ausgeführt, mit einer relativ geringen Materialdicke, wobei der äußere Randabschnitt die Verankerungsmittel und der innere Randabschnitt die Haltemittel bildet.

Die Haltemittel sind zweckmäßigerweise relativ zum Hauptkörper beweglich ausgeführt und es kann ein bezüglich dem Einsatz axial beweglicher Lösekörper vorhanden sein, mit dem durch manuelle Betätigung derart auf die Haltemittel eingewirkt werden kann, dass diese eine nach radial außen gerichtete Freigabebewegung ausführen, um eine zuvor eingesteckte Fluidleitung zur Entnahme freizugeben.

Es ist des Weiteren von Vorteil, wenn der Einsatz mit einer ringförmigen Dichtung ausgestattet ist, die eine Mehrfachfunktion hat, indem sie den Einsatz sowohl bezüglich der Aufnahme des zugeordneten Bauteils als auch bezüglich der eingesteckten Fluidleitung abdichtet. Die Dichtung ist insbesondere stoffschlüssig fest mit dem Hauptkörper verbunden, beispielsweise durch Realisierung des Hauptkörpers und der Dichtung als Zweikomponenten-Spritzgussteil.

Die Dichtung ist vorzugsweise an der in Montagerichtung weisenden Vorderseite des Einsatzes angeordnet, so dass sie bei der Steckmontage über eine von Verankerungsmitteln noch nicht beeinträchtigte Umfangsfläche der Aufnahme hinweggleiten kann.

Nachfolgend wird die Erfindung anhand der beiliegenden Zeichnung näher erläutert. In dieser zeigen:

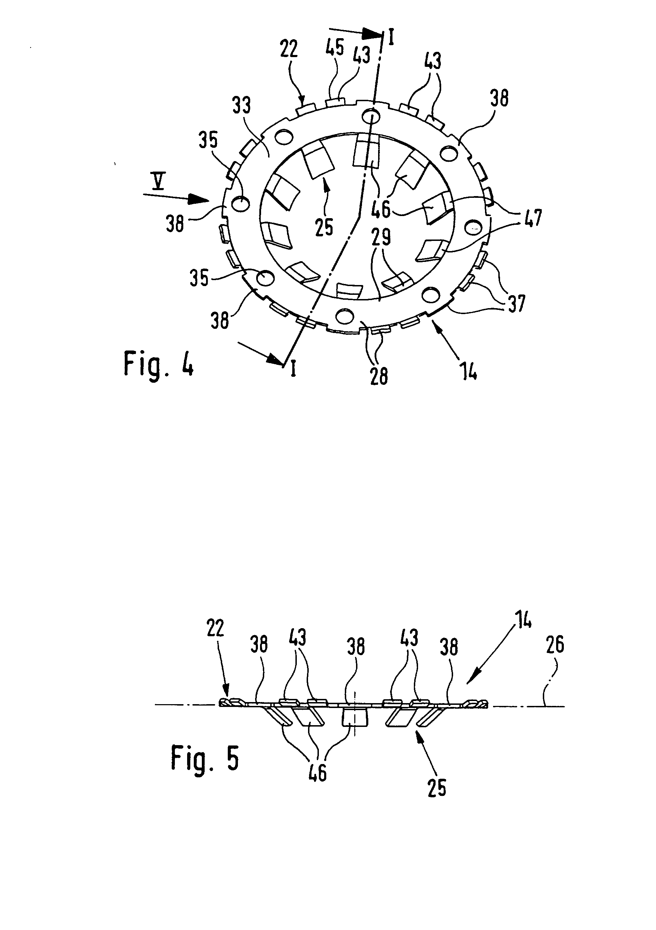

- Figur 1: eine bevorzugte Ausführungsform der erfindungsgemäßen Anschlussvorrichtung im Längsschnitt, wobei die Schnittebene im Bereich des eingegliederten Ringkörpers gemäß Schnittlinie I-I aus Figur 4 verläuft und wobei strichpunktiert ein mit der Anschlussvorrichtung ausgestattetes Bauteil sowie eine an die Anschlussvorrichtung angeschlossene Fluidleitung dargestellt sind,

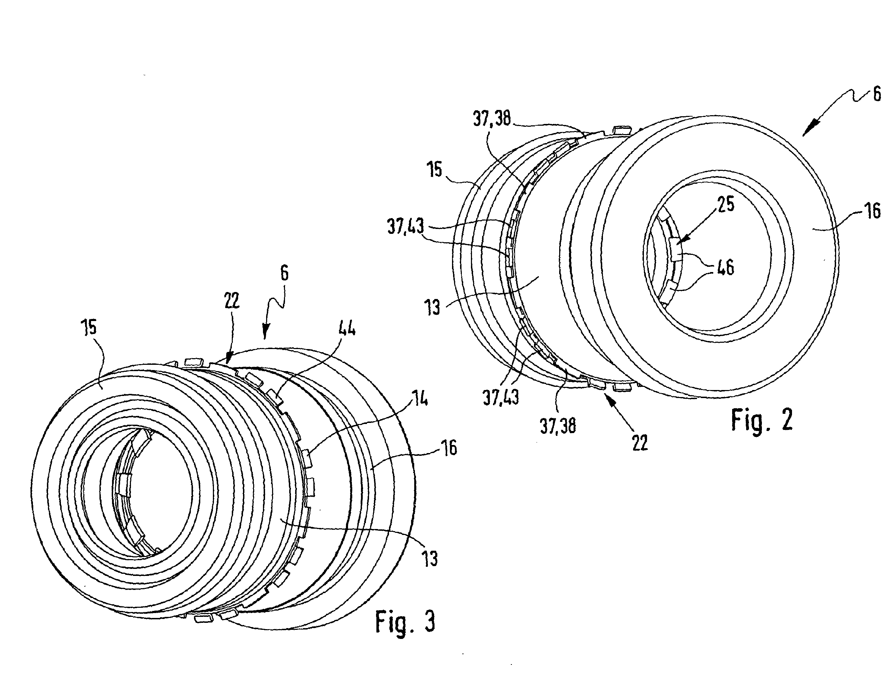

- Figur 2: eine perspektivische Einzeldarstellung der Anschlussvorrichtung aus Figur 1 mit Blick auf die entgegen der Montagerichtung des Einsatzes weisende Handhabungsseite,
- Figur 3: eine weitere perspektivische Darstellung der Anschlussvorrichtung mit Blick auf die in Montagerichtung weisende Vorderseite,
- Figur 4: eine Einzeldarstellung des mit Verankerungsmitteln und mit Haltemitteln ausgestatteten Ringkörpers in perspektivischer Darstellung und von der Handhabungsseite her gesehen, und
- Figur 5: eine weitere Einzeldarstellung des Ringkörpers aus Figur 1 in einer Seitenansicht mit Blickrichtung gemäß Pfeil V.

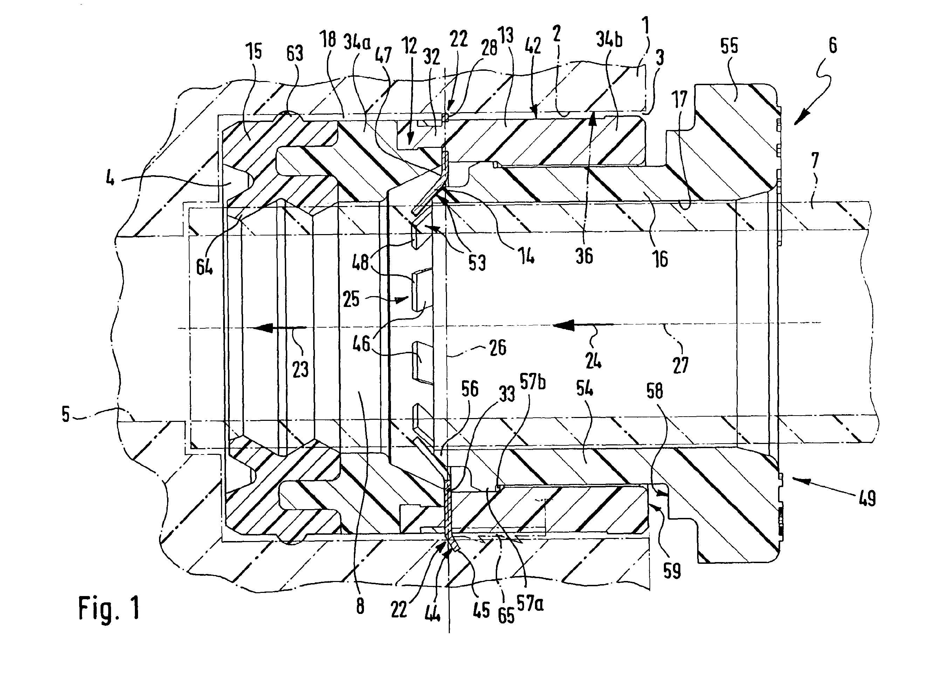

In Figur 1 ist strichpunktiert der Ausschnitt eines Bauteils 1 einer fluidtechnischen Einrichtung abgebildet, wobei es sich bei dem Bauteil 1 beispielsweise um das Gehäuse oder die Wandung eines Ventils, eines Linear- oder Drehantriebes, eines Druckluft-Wartungsgerätes oder eines Druckluftspeichers handeln kann, wobei diese Aufzählung als nicht abschließend zu sehen ist.

Das Bauteil 1 verfügt über mindestens eine vorzugsweise zylindrisch und insbesondere kreiszylindrisch gestaltete Aufnahme 2, die am äußeren axialen Ende 3 zu einer Außenfläche des Bauteils 1 hin offen ist und die im Bereich ihres inneren axialen Endes 4 in einen weiterführenden Fluidkanal 5 des Bauteils 1 übergeht.

In der Aufnahme 2 ist eine Anschlussvorrichtung 6 gehalten, die es ermöglicht, eine fluidische Verbindung zwischen einer wiederum strichpunktiert angedeuteten starren oder flexiblen Fluidleitung 7 und dem Fluidkanal 5 herzustellen. Die Fluidleitung 7 kann in die Anschlussvorrichtung 6 eingeführt werden, wo sie insbesondere lösbar gehalten wird.

Die Anschlussvorrichtung 6 verfügt über einen einen axialen Durchgang 8 aufweisenden Einsatz 12, der im Rahmen einer Steckmontage in der Aufnahme 2 festlegbar ist. Bei dieser Steckmontage wird der Einsatz 2 unter Aufbringung einer gewissen Montagekraft koaxial gemäß Pfeil 23 in die Aufnahme 2 eingepresst. Der Einsatz 12 umfasst einen hülsenartigen Hauptkörper 13 sowie einen an dem Hauptkörper 13 koaxial fixierten Ringkörper 14 und beinhaltet vorzugsweise ferner eine ringförmige Dichtung 15.

Die Anschlussvorrichtung 6 verfügt vorzugsweise desweiteren über einen an dem Einsatz 12 bezüglich diesem axial beweglich gelagerten Lösekörper 16, der einen zum axialen Durchgang 8 des Einsatzes 12 koaxialen axialen Durchgang 17 aufweist.

Im an dem Bauteil 1 montierten Zustand der Anschlussvorrichtung 6 ist der Einsatz 12 vorzugsweise über seine gesamte axiale Länge in der Aufnahme 2 aufgenommen und schließt insbesondere bündig mit der sich an das äußere axiale Ende 3 der Aufnahme 2 anschließenden Außenfläche des Bauteils 1 ab.

Der außen zylindrische Hauptkörper 13 hat einen geringfügig kleineren Durchmesser als die ihn aufnehmende Aufnahme 2. Der dadurch entstehende minimale ringförmige Zwischenraum 18 wird von im Bereich des Außenumfanges des Hauptkörpers 13 vorgesehenen metallischen Verankerungsmitteln 22 überbrückt, die der Hauptkörper 13 trägt und bei denen es sich um Bestandteile des an dem Hauptkörper 13 fixierten Ringkörpers 14 handelt.

Der über seinen gesamten Umfang hinweg vorzugsweise geschlossene Ringkörper 14 ist ein bezüglich dem Hauptkörper 13 separates Element, das koaxial zu dem Hauptkörper 13 angeordnet ist, wobei es bezüglich dem Hauptkörper 13 axial und vorzugsweise auch radial unbewegbar festgelegt ist. Durch die Verankerungsmittel 22 wird der Hauptkörper 13 und somit der Einsatz 12 im in die Aufnahme 2 eingepressten Zustand an dem Bauteil 1 derart gehalten, dass eine entgegen der Montagerichtung 23 erfolgende Entnahme des Einsatzes 12 aus der Aufnahme 2 normalerweise nicht mehr möglich ist. Somit wird der Einsatz 12 und damit die Anschlussvorrichtung 6 ohne Schraubverbindung gehalten, was den Herstellungs- und Montageaufwand beträchtlich reduziert.

Der Ringkörper 14 übernimmt beim Ausführungsbeispiel eine Doppelfunktion. Er dient nicht nur zur Verankerung des Einsatzes 12 in der Aufnahme 2, sondern auch zum Festhalten der anzuschließenden Fluidleitung 7, nachdem diese in die Anschlussvorrichtung 6 in einer Anschlussrichtung 24 eingeführt wurde. Er verfügt zu diesem Zweck über im Bereich des Innenumfanges des Hauptkörpers 13 angeordnete Haltemittel 25, die ausgebildet sind, um die eingeführte Fluidleitung 7 im Bereich ihres Außenumfanges haltend beaufschlagen zu können.

Somit sind also sowohl die Verankerungsmittel 22 als auch die Haltemittel 25 von Bestandteilen des Ringkörpers 14 gebildet. Um die auftretenden Kräfte übertragen zu können, bestehen sie aus Metall, was vorzugsweise dadurch realisiert ist, dass der Ringkörper 14 in seiner Gesamtheit als Metallteil ausgeführt ist und insbesondere aus Federstahlmaterial besteht.

Es wäre zwar prinzipiell möglich, die Haltemittel 25 als bezüglich des die Verankerungsmittel bildenden Ringkörpers 14 separate Komponenten auszuführen und beispielsweise in Form eines eigenständigen Ringkörpers zu gestalten. Durch die beim Ausführungsbeispiel vorhandene einstückige Baueinheit erzielt man jedoch den vorteilhaften Effekt, dass mit nur einem Bauteil sowohl die Verankerungsfunktion als auch die Haltefunktion verwirklicht werden kann.

Der Ringkörper 14 verfügt zweckmäßigerweise über eine nur relativ geringe Materialstärke und ist durch Stanzen oder kombiniertes Stanzen und Biegen aus einem ebenen scheibenartigen Metallteil hergestellt. Seine Hauptausdehnungsebene 26 verläuft rechtwinkelig zur Längsachse 27 des Einsatzes 12 beziehungsweise der Anschlussvorrichtung 6.

Zweckmäßigerweise sind die Verankerungsmittel 22 unmittelbar vom nach radial außen orientierten äußeren Randabschnitt 28 des Ringkörpers 14 gebildet. Die Haltemittel 25 sind zweckmäßigerweise unmittelbar vom nach radial innen orientierten inneren Randabschnitt 29 des Ringkörpers 14 gebildet. Dabei sind diese Randabschnitte 28, 29 derart geformt, dass die gewünschte Verankerungs- beziehungsweise Haltefunktion gewährleistet wird.

Der Ringkörper 14 hat zweckmäßigerweise die Form eines zentral gelochten Scheibenkörpers der am äußeren und inneren Randabschnitt 28, 29 so bearbeitet ist, dass sich die Verankerungsmittel 22 und die Haltemittel 25 ergeben.

Der den Ringkörper 14 tragende Hauptkörper 13 kann aus nichtmetallischem Material bestehen, insbesondere aus Kunststoffmaterial, da die für die Verankerung in der Aufnahme 2 erforderliche Funktion von dem metallischen Ringkörper 14 übernommen wird. Es ist auf diese Weise möglich, den Hauptkörper 13 aus kostengünstigem und technologisch besonders einfach verarbeitbarem Material herzustellen.

Vorzugsweise ist der Ringkörper 14 dadurch am Hauptkörper 13 fixiert, dass er koaxial in den Hauptkörper 13 eingebettet ist. Er durchgreift die Wandung 32 des Hauptkörpers 13 radial von außen nach innen, wobei er mit einem vorzugsweise ringsum in sich geschlossenen ringschreibenförmigem Einbettungsabschnitt 33 in besagter Wandung 32 festgelegt ist und wobei die Verankerungsmittel 22 über den Außenumfang des Hauptkörpers 13 hinausragen und die Haltemittel 25 nach innen in den vom Hauptkörper 13 umgrenzten und von dem axialen Durchgang 8 gebildeten Innenraum vorstehen.

Gemäß Figur 1 ist der Ringkörper 14 axial zwischen zwei koaxial aufeinanderfolgende und axial zugfest miteinander verbundene hülsenförmige Hauptkörperabschnitte 34a, 34b eingegliedert. Dabei wird der Ringkörper 14 vom Material des Hauptkörpers 13 in axialer Richtung passiert und es sind die Hauptkörperabschnitte 34a, 34b auf diese Weise unmittelbar fest miteinander verbunden. Um dies zu ermöglichen, ist der Ringkörper beim Ausführungsbeispiel an seinem Einbettungsabschnitt 33 mit von axialen Durchbrechungen gebildeten Aussparungen 35 versehen, die in Umfangsrichtung des Ringkörpers 14 verteilt angeordnet sind und die vom Material des Hauptkörpers durchsetzt werden.

Es wäre prinzipiell möglich, die beiden Hauptkörperabschnitte 34a, 34b mechanisch, zum Beispiel durch Verrastung, fest miteinander zu verbinden. Beim Ausführungsbeispiel liegt hingegen eine kostengünstigere Realisierungsform vor, indem hier zwischen den beiden Hauptkörperabschnitten 34a, 34b eine vorzugsweise durch Spritzgießen hergestellte stoffschlüssige Verbindung vorgesehen ist. Technologisch lässt sich dies beispielsweise dadurch realisieren, dass zunächst einer der Hauptkörperabschnitte 34a, 34b separat, beispielsweise durch Spritzgießen, hergestellt wird, wonach der hergestellte Hauptkörperabschnitt mit dem Ringkörper 14 bestückt wird und anschließend in einem weiteren Spritzgießvorgang der zweite Hauptkörperabschnitt angeformt wird.

Alternativ hierzu wäre auch eine einstückige Verbindung zwischen den beiden Hauptkörperabschnitten möglich, wobei im Rahmen eines einzigen Spritzgießvorganges der gesamte Hauptkörper an den Ringkörper 14 angeformt wird.

Die Verankerungsmittel 22 könnten unmittelbar von einem unterbrechungslos umlaufenden äußeren Randabschnitt des Ringkörpers 14 gebildet sein. Da zum Erhalt des Verankerungseffektes jedoch ein Übermaß bezüglich des Innendurchmessers der Aufnahme 2 erforderlich ist, könnte dies jedoch aufgrund der in der Regel fehlenden radialen Nachgiebigkeit einen zu starken Abschabeffekt an der Innenoberfläche 36 der Aufnahme 2 zur Folge haben. Aus diesem Grund wird die beim Ausführungsbeispiel realisierte Variante vorgezogen, bei der der äußere Randabschnitt 28 des Ringkörpers 14 an in Umfangsrichtung verteilten Stellen unterbrochen ist, so dass sich eine Mehrzahl individueller Verankerungselemente 37 ergibt, die in der Umfangsrichtung des Ringkörpers 14 und somit auch in der Umfangsrichtung des Hauptkörpers 13 verteilt sind.

Unter diesen Verankerungselementen 37 befinden sich beim Ausführungsbeispiel mehrere Stützelemente 38, die in der Hauptausdehnungsebene des Ringkörpers 14 verlaufen und aus dieser insbesondere auch nicht ausgebogen sind. Sie stehen radial über den Außenumfang 42 des Hauptkörpers 13 vor und definieren einen Außendurchmesser des Ringkörpers 14, der zweckmäßigerweise mit dem Innendurchmesser der Aufnahme 2 übereinstimmt. Der in die Aufnahme 2 eingeführte Einsatz 12 wird somit durch die Stützabschnitte 38 bezüglich dem Bauteil 1 quer zur Längsachse 27 abgestützt und in der Aufnahme 2 zentriert.

Die Stützelemente 38 sind vorzugsweise laschenartig ausgebildet, wobei mehrere und insbesondere sämtliche Stützelemente 38 auf gleicher axialer Höhe des Hauptkörpers 13 platziert sind und sich in einer gemeinsamen Radialebene erstrecken, die hier von der Hauptausdehnungsebene 26 gebildet ist.

Unter den Verankerungselementen 37 befinden sich weiterhin mehrere über den Umfang des Ringkörpers 14 verteilte Verhakungselemente 43, die widerhakenartig nach außen über den Außenumfang 42 des Hauptkörpers 13 vorstehen und die maßgeblich für die axial zugfeste Verankerung des Einsatzes 12 in der Aufnahme 2 verantwortlich sind.

Die Verhakungselemente 43 verfügen jeweils über eine Schrägfläche 44, die zum freien Ende 45 der Verhakungselemente 43 hin entgegen der Montagerichtung 23 nach radial außen ansteigt. Außerdem ist der von den freien Enden 45 der Verhakungselemente 43 definierte Außendurchmesser des Ringkörpers 14 größer als derjenige der Stützelemente 38 beziehungsweise als der Innendurchmesser der Aufnahme 2. Dieses Übermaß hat zur Folge, dass zum Einstecken des Einsatzes 12 in die Aufnahme 2 eine Drückkraft ausgeübt werden muss. Bei dem daraus resultierenden Einpressvorgang gleiten die Verhakungselemente 43 mit ihrer Schrägfläche 44 an der Innenoberfläche 36 der Aufnahme 2 ab, wobei sie je nach Gestaltung der Verhakungselemente 43 und der Materialbeschaffenheit des Bauteils 1 auch bereits in die Innenoberfläche 36 eindringen können. Ist die gewünschte Einpresstiefe erreicht, verhindert das Zusammenwirken zwischen den zweckmäßigerweise mit einer scharfen Kante ausgeführten freien Enden 45 der Verhakungselemente 43 und der Innenoberfläche 36 des Bauteils 1 einen Herausziehen des Einsatzes 12 entgegen der Montagerichtung 23.

Beim Ausführungsbeispiel haben die Verhakungselemente 43 eine Ausgestaltung, die ein Einpressen des Einsatzes 12 mit relativ geringer Drückkraft gestattet und trotzdem eine optimale Sicherheit gegen nachfolgendes Herausziehen liefert. In diesem Zusammenhang sind die Verhakungselemente 43 laschenartig ausgebildet und verfügen über eine der Neigung der Schrägfläche 44 entsprechende Schrägstellung, wobei radial zwischen den Verhakungselementen 43 und dem Hauptkörper 13 ein Freiraum vorgesehen ist, der den federelastischen Verhakungselementen 43 eine gewisse radiale Beweglichkeit verleiht. Wird nun der Einsatz 12 in die Aufnahme 2 eingesteckt, werden die Verhakungselemente 43 durch den Kontakt zwischen ihren Schrägflächen 44 und der Innenoberfläche 36 der Aufnahme 2 geringfügig nach radial innen verschwenkt. Wird anschließend entgegen der Montagerichtung 23 eine Zugkraft auf den Hauptkörper 13 ausgeübt, bewirkt dies durch den formschlüssigen Kontakt zwischen den Verhakungselementen 43 und dem Bauteil 1 in gewissem Rahmen ein Aufstellen der Verhakungselemente 43, so dass diese zwischen dem Bauteil 1 und dem Hauptkörper 13 versprießt werden und sich in dem Bauteil 1 verkrallen.

Obgleich die Verhakungselemente 43 auch ohne zusätzliche Stützelemente 38 bereits gut wirksam wären, ergibt sich durch die kombinierte Anordnung von Verhakungselementen 43 und Stützelementen 38 eine optimale funktionelle Ergänzung. Man wird dabei die Verhakungselemente 43 und die Stützelemente 38 zweckmäßigerweise in einer gewissen abwechselnden Aufeinanderfolge vorsehen, wobei im Falle des Ausführungsbeispiels auf jedes Stützelement 38 zwei Verankerungselemente 43 folgen.

Die Verankerungselemente 43 sind zweckmäßigerweise dadurch erhalten, dass der äußere Randabschnitt 28 des Ringkörpers 14 an den entsprechenden Stellen aus der Hauptausdehnungsebene 26 entgegen der Montagerichtung 23 ausgebogen sind.

Die zum Fixieren der eingesteckten Fluidleitung 7 dienenden Haltemittel 25 sind beim Ausführungsbeispiel von relativ zum Hauptkörper 13 beweglichen federelastischen Krallenelementen 46 gebildet. Sie sind aus der Hauptausdehnungsebene 26 des Ringkörpers 14 in entgegengesetzte Richtung wie die Verhakungselemente 43 ausgebogen, wobei an der Biegestelle 47 eine nicht näher dargestellte Einprägung vorgesehen sein kann, um die Biegeelastizität zu erhöhen. Die Krallenelemente 46 verlaufen zum freien Ende 48 hin nach radial innen und zugleich in der Montagerichtung 23, wobei ihre freien Enden 48 einen Innendurchmesser des Ringkörpers 14 definieren, der - bei nicht eingesteckter Fluidleitung 7 betrachtet - geringer ist als der Außendurchmesser dieser Fluidleitung 7.

Eine anzuschließende Fluidleitung 7 wird von der dem äußeren axialen Ende 3 der Aufnahme 2 zugeordneten Handhabungsseite 49 her in der Anschlussrichtung 24 in die Anschlussvorrichtung 6 eingesteckt. Dabei gelangt sie mit ihrer Stirnseite in Kontakt mit der entgegen der Anschlussrichtung 24 orientierten schrägen Rückseite 53 der Krallenelemente 46, welche daraufhin nach radial außen verschwenkt werden, so dass die Fluidleitung 7 durch den Ringkörper 14 hindurch steckbar ist. Bedingt durch die federnde Rückstellkraft wird anschließend die Fluidleitung 7 im Bereich ihres Außenumfanges von den Krallenelementen 46 beaufschlagt und gehalten. Bei einer aus flexiblem Material bestehenden Fluidleitung 7 oder bei einer mit einer Verankerungsnut versehenen starren Fluidleitung 7 können die Krallenelemente 46 mit ihren freien Enden 48 formschlüssig mit der Fluidleitung 7 in Eingriff gelangen.

In Fällen, bei denen ein bedarfsgemäßes Entfernen einer zuvor angeschlossenen Fluidleitung 7 ermöglicht werden soll, ist die Anschlussvorrichtung 6 mit einem Lösekörper 16 der eingangs angesprochenen Art ausgestattet. Dieser ragt mit einem hülsenartigen Beaufschlagungsabschnitt 54 von der dem äußeren axialen Ende 3 der Aufnahme 2 zugeordneten Rückseite des Einsatzes 12 her in den axialen Durchgang 8 hinein. Über diesen Beaufschlagungsabschnitt 54 ist der Lösekörper 16 am Innenumfang des Hauptkörpers 13 axial verschiebbar geführt. Ein mit dem Beaufschlagungsabschnitt 54 verbundener Handhabungsabschnitt 55 des Lösekörpers 16 befindet sich außerhalb des Einsatzes 12 und ist diesem zur Handhabungsseite 49 hin vorgelagert.

Die eingesteckte Fluidleitung 7 durchsetzt den Lösekörper 16, wobei der Durchmesser der axialen Durchbrechung 17 so gewählt ist, dass die axiale Beweglichkeit des Lösekörpers 16 nicht beeinträchtigt wird.

Der Lösekörper 16 erstreckt sich ins Innere des axialen Durchganges 8 bis hin zum Ringkörper 14, wobei er mit einem ringförmigen Beaufschlagungsabschnitt 56 endet, der den Rückseiten 53 der Krallenelemente 46 axial gegenüberliegt. Zum Entfernen der Fluidleitung 7 wird manuell auf den Handhabungsabschnitt 55 eine mit der Anschlussrichtung 24 gleichgerichtete Betätigungskraft ausgeübt, so dass der Lösekörper 16 in der Anschlussrichtung 24 verlagert wird, wobei er rückseitig auf die Krallenelemente 46 einwirkt und diese zu einer radial nach außen gerichteten und als Freigabebewegung bezeichenbaren Schwenkbewegung veranlasst. Die Krallenelemente 46 gelangen auf diese Weise außer Eingriff mit der Wandung der Fluidleitung 7, die mithin aus der Anschlussvorrichtung 6 herausgezogen werden kann.

Der Lösekörper 16 ist an dem Einsatz 12 zweckmäßigerweise verliersicher gehalten. Beim Ausführungsbeispiel verfügt er hierzu über einen oder mehrere nach radial außen orientierte Radialvorsprünge 57a, die eine Stufe 57b am Innenumfang des Hauptkörpers 13 hintergreifen können.

Die zum Einpressen des Einsatzes 12 in die Aufnahme 2 erforderliche Einpresskraft kann bei der Anschlussvorrichtung 6 problemlos auf den Handhabungsabschnitt 55 des Lösekörpers 16 aufgebracht werden. Dieser wird dabei zunächst ein Stück weit in den Einsatz 12 hineingeschoben, bis er mit einer Abstützfläche 58 an der gegenüberliegenden Stirnfläche 59 des Einsatzes 12 zur Anlage gelangt und somit die Einpresskraft auf den Einsatz 12 übertragen wird.

Die Anschlussvorrichtung 6 ist schließlich auch noch mit einer Dichtung 15 ausgestattet, die einen festen Bestandteil des Einsatzes 12 bildet, so dass die Anschlussvorrichtung 6 mit allen Bestandteilen eine zusammenhängende Baueinheit bildet, die bei der Montage wie ein einziges Bauteil gehandhabt werden kann.

Die Dichtung 15 ist koaxial zum Hauptkörper 13 angeordnet und vorzugsweise an der in Montagerichtung 23 weisenden Vorderseite des Einsatzes 12 platziert. Sie ist insbesondere als Kombinationsdichtung ausgelegt, die einen zur Abdichtung gegenüber der Innenoberfläche 36 der Aufnahme 2 dienenden ersten Dichtabschnitt 63 und einen zur Abdichtung gegenüber dem Außenumfang der eingesteckten Fluidleitung 7 dienenden zweiten Dichtabschnitt 64 aufweist. Die Dichtung 15 wird von der eingesteckten Fluidleitung 7 koaxial durchsetzt. Der zweite Dichtabschnitt 64 beinhaltet eine Dichtlippe, die radial elastisch ist, um eine Anpassung an den jeweiligen Außendurchmesser der eingesteckten Fluidleitung 7 zu gewährleisten.

Es wäre prinzipiell möglich, die Dichtung 15 rein mechanisch am Hauptkörper 13 zu fixieren, beispielsweise durch eine Rast- oder Schnappverbindung. Im Falle des Ausführungsbeispiels ist die Dichtung 15 allerdings allein durch Stoffschluss fest mit dem Hauptkörper 13 verbunden, was insbesondere dadurch realisierbar ist, dass man die Dichtung 15 im Rahmen eines Spritzgießverfahrens an den Hauptkörper 13 anformt.

Bei einer bevorzugten Herstellungsweise des Einsatzes 12 wird in einem ersten Produktionsschritt ein aus der Dichtung 15 und aus dem sich anschließenden ersten Hauptkörperabschnitt 34a bestehendes Zweikomponenten-Bauteil hergestellt. Anschließend wird der erste Hauptkörperabschnitt 34a auf der der Dichtung 15 entgegengesetzten Axialseite mit dem Ringkörper 14 bestückt, worauf schließlich der zweite Hauptkörperabschnitt 34b durch Spritzgießen angeformt wird.

Abschließend sei noch auf eine in Figur 1 strichpunktiert angedeutete Ausführungsvariante 65 der Verankerungsmittel 22 hingewiesen. Dabei ist vorgesehen, dass der Ringkörper 14 radial außen einen zylindrischen Endabschnitt besitzt, der den Hauptkörper 13 konzentrisch umschließt und mit einer Vielzahl von beispielsweise durch Ausprägen realisierten Verankerungsmitteln 22 versehen ist. Im Vergleich zu der oben im Detail geschilderten Lösung kann auf diese Weise die von den Verankerungsmitteln 22 überdeckte axiale Länge des Hauptkörpers 13 vergrößert werden.

## Patentansprüche

1. Anschlussvorrichtung für eine Fluidleitung, mit einem zur Steckmontage in einer Aufnahme eines anderen Bauteils vorgesehenen Einsatz (12), der über einen hülsenartigen Hauptkörper (13) verfügt, an dessen Außenumfang zur Verankerung in der Aufnahme dienende metallische Verankerungsmittel (22) vorgesehen sind, **dadurch gekennzeichnet, dass** die Verankerungsmittel (22) von Bestandteilen eines an dem Hauptkörper (13) fixierten Ringkörpers (14) gebildet sind.

2. Anschlussvorrichtung nach Anspruch 1, **dadurch gekennzeichnet, dass** der Ringkörper (14) an dem Hauptkörper (13) sowohl axial als auch radial unbewegbar fixiert ist.

3. Anschlussvorrichtung nach Anspruch 1 oder 2, **dadurch gekennzeichnet, dass** der Hauptkörper (13) aus nichtmetallischem Material besteht, vorzugsweise aus Kunststoffmaterial.

4. Anschlussvorrichtung nach einem der Ansprüche 1 bis 3, **dadurch gekennzeichnet, dass** der Ringkörper (14) vollständig aus Metall und insbesondere aus Federstahlmaterial besteht.

5. Anschlussvorrichtung nach einem der Ansprüche 1 bis 4, **dadurch gekennzeichnet, dass** die Verankerungsmittel (22) unmittelbar vom nach radial außen orientierten äußeren Randabschnitt (28) des Ringkörpers (14) gebildet sind, wobei der äußere Randabschnitt (28) zweckmäßigerweise zur Ausbildung von mit Abstand über den Außenumfang des Hauptkörpers (13) verteilten Verankerungselementen (37) stellenweise unterbrochen ist.

6. Anschlussvorrichtung nach einem der Ansprüche 1 bis 5, **dadurch gekennzeichnet, dass** die Verankerungsmittel (22) über den Außenumfang des Hauptkörpers (13) verteilt angeordnete Verankerungselmente (37) aufweisen, die radial über den Außenumfang des Haltekörpers (13) vorstehende Stützelemente (38) enthalten.

7. Anschlussvorrichtung nach Anspruch 6, **dadurch gekennzeichnet, dass** die Stützelemente (38) laschenartig ausgebildet sind.

8. Anschlussvorrichtung nach Anspruch 6 oder 7, **dadurch gekennzeichnet, dass** mehrere oder sämtliche Stützelemente (38) auf gleicher axialer Höhe des Hauptkörpers (13) platziert sind und sich in einer gemeinsamen Radialebene (26) erstrecken können.

9. Anschlussvorrichtung nach einem der Ansprüche 1 bis 8, **dadurch gekennzeichnet, dass** die Verankerungsmittel (22) über den Außenumfang des Hauptkörpers (13) verteilt angeordnete Verankerungselemente (37) aufweisen, die widerhakenartig nach außen über den Außenumfang des Hauptkörpers (13) vorstehende Verhakungselemente (43) enthalten.

10. Anschlussvorrichtung nach Anspruch 9, **dadurch gekennzeichnet, dass** die Verhakungselemente (43) radial federelastisch beweglich sind.

11. Anschlussvorrichtung nach einem der Ansprüche 6 bis 10, **dadurch gekennzeichnet, dass** der Ringkörper (14) sowohl mit Stützelementen (38) als auch mit Verhakungselementen (43) ausgestattet ist, vorzugsweise in einer gewissen abwechselnden Aufeinanderfolge.

12. Anschlussvorrichtung nach Anspruch 11, **dadurch gekennzeichnet, dass** die Verhakungselemente (43) die Stützelemente (38) radial überragen.

13. Anschlussvorrichtung nach Anspruch 12, **dadurch gekennzeichnet, dass** der Ringkörper (14) zu seiner Fixierung koaxial in den Hauptkörper (13) eingebettet ist.

14. Anschlussvorrichtung nach Anspruch 13, **dadurch gekennzeichnet, dass** der Ringkörper (14) einen vorzugsweise in sich geschlossenen ringförmigen Einbettungsabschnitt (33) aufweist, mit dem er in der Wandung des Hauptkörpers (13) festgelegt ist.

15. Anschlussvorrichtung nach Anspruch 13 oder 14, **dadurch gekennzeichnet, dass** der Ringkörper (14) axial zwischen zwei koaxial aufeinanderfolgende und axial zugfest miteinander verbundene hülsenförmige Hauptkörperabschnitte (34a, 34b) eingegliedert ist.

16. Anschlussvorrichtung nach Anspruch 15, **dadurch gekennzeichnet, dass** die beiden Hauptkörperabschnitte (34a, 34b) durch eine stoffschlüssige Verbindung fest miteinander verbunden sind, insbesondere durch Spritzgießen.

17. Anschlussvorrichtung nach Anspruch 15, **dadurch gekennzeichnet, dass** die beiden Hauptkörperabschnitte (34a, 34b) Bestandteile eines einstückigen Hauptkörpers (13) sind.

18. Anschlussvorrichtung nach einem der Ansprüche 13 bis 17, **dadurch gekennzeichnet, dass** der Ringkörper (14) über Aussparungen (35) verfügt, die vom Hauptkörper (13) durchsetzt sind.

19. Anschlussvorrichtung nach einem der Ansprüche 1 bis 18, **dadurch gekennzeichnet, dass** im Bereich des Innenumfanges des Hauptkörpers (13) Haltemittel (25) zum Festhalten der in den Einsatz (12) eingeführten und anzuschließenden Fluidleitung vorgesehen sind.

20. Anschlussvorrichtung nach Anspruch 19, **dadurch gekennzeichnet, dass** die Haltemittel (25) von Bestandteilen des die Verankerungsmittel (22) aufweisenden Ringkörpers (14) gebildet sind.

21. Anschlussvorrichtung nach Anspruch 20, **dadurch gekennzeichnet, dass** der Ringkörper (14) die Wandung des Hauptkörpers (13) radial durchgreift, wobei die Verankerungsmittel (22) über den Außenumfang des Hauptkörpers (13) hinausragen und die Haltemittel (25) in den vom Hauptkörper (13) umgrenzten Innenraum vorstehen.

22. Anschlussvorrichtung nach Anspruch 20 oder 21, **dadurch gekennzeichnet, dass** die Haltemittel (25) unmittelbar vom nach radial innen orientierten inneren Randabschnitt (29) des Ringkörpers (14) gebildet sind.

23. Anschlussvorrichtung nach einem der Ansprüche 19 bis 22, **dadurch gekennzeichnet, dass** die Haltemittel (25) relativ zum Hauptkörper (13) beweglich sind und ausgebildet sind, um eine eingeführte Fluidleitung umfangsseitig beaufschlagen zu können.

24. Anschlussvorrichtung nach einem der Ansprüche 19 bis 23, **dadurch gekennzeichnet, dass** die Haltemittel (25) von federelastisch beweglichen Krallenelementen (46) gebildet sind.

25. Anschlussvorrichtung nach Anspruch 23 oder 24, **gekennzeichnet durch** einen bezüglich dem Einsatz (12) beweglichen Lösekörper (16), der **durch** manuelle Betätigung derart auf die Haltemittel (25) einwirken kann, dass diese eine nach radial außen gerichtete Freigabebewegung ausführen.

26. Anschlussvorrichtung nach Anspruch 25, **dadurch gekennzeichnet, dass** der Lösekörper (16) eine axiale Durchbrechung (17) aufweist und in den Einsatz (12) hineinragt, wobei er am Hauptkörper (13) axial verstellbar geführt ist und einen den Haltemitteln (25) axial gegenüberliegenden Beaufschlagungsabschnitt (56) aufweist.

27. Anschlussvorrichtung nach einem der Ansprüche 1 bis 26, **gekennzeichnet durch** eine als Bestandteil des Einsatzes (12) ausgeführte ringförmige Dichtung (15), die einen zur Abdichtung gegenüber der Aufnahme des anderen Bauteils dienenden ersten Dichtabschnitt (63) und einen zur Abdichtung gegenüber der einsteckbaren Fluidleitung (7) dienenden zweiten Dichtabschnitt (64) aufweist.

28. Anschlussvorrichtung nach Anspruch 27, **dadurch gekennzeichnet, dass** die Dichtung (15) stoffschlüssig fest mit dem Hauptkörper (13) verbunden ist, beispielsweise indem sie durch Spritzgießen angeformt ist.

29. Anschlussvorrichtung nach Anspruch 27 oder 28, **dadurch gekennzeichnet, dass** die Dichtung (15) an der in Montagerichtung (23) weisenden Vorderseite des Einsatzes (12) angeordnet ist.

30. Anschlussvorrichtung nach einem der Ansprüche 1 bis 29, **dadurch gekennzeichnet, dass** der Ringkörper (14) ringscheibenähnlich gestaltet und vorzugsweise als Stanzbiegeteil ausgeführt ist.
